# EUROPEAN PATENT APPLICATION

(11) **EP 1 429 526 A2**
(43) Date of publication of application: **16.06.2004**
(21) Application number: 03257782.7
(22) Date of filing: 10.12.2003
(51) Int. Cl.: H04M 1/725

(54) **Data processing apparatus**

(30) Priority: 10.12.2002 JP 2002358776
(71) Applicant: MATSUSHITA ELECTRIC INDUSTRIAL CO., LTD., Kadoma-shi, Osaka 571-8501 (JP)
(72) Inventor: Kikuchi, Takafumi, Ota-ku Tokyo 144-0046 (JP); Kawaguchi, Kyoko, Setagaya-ku Tokyo 156-0057 (JP); Takagi, Yoshihiko, Tokyo 144-0046 (JP); Minemura, Atsushi, Tokyo 173-0031 (JP); Sakushima, Kazuo, Kawasaki-shi Kanagawa 213-0001 (JP)
(74) Representative: Leeming, John Gerard

(57) **Abstract**

One objective of the invention is to provide a hybrid portable communication terminal, as a data processing apparatus, that can employ together application programs for both a portable telephone and a contactless card terminal and that can communicate with an external device in accordance with a predetermined protocol by using, as needed, an appropriate application program, while another other objective is to permit a local server to identify each terminal.

A hybrid portable communication terminal comprising terminals having different communication systems employs together or selectively, as needed, an application program for a telephone terminal and an application program for performing various data processing procedures, with an external communication terminal, using close-range contactless communication. Furthermore, so that a local server can identify each terminal, a terminal ID is registered and transmitted to the local server.

## Description

The present invention relates to a data processing apparatus, and in particular, to an apparatus wherein a plurality of devices are interconnected and wherein only one internal device is interfaced with an external device, which enables communication between other internal devices and the external device, especially communications originating at the external device that are transmitted to the other internal devices.

As the use of portable telephones, such as so-called cellular phone systems, has spread, various application programs have been mounted on personal, portable terminals, such as portable telephones, that permit users to employ the Internet to access desired servers. In addition, a contactless card terminal, in which a coil antenna and an IC are mounted, has been put to practical use and is actually being employed as a prepaid card for mass transit (see patent document 1 below). Furthermore, the standard for an example communication method that uses a contactless IC card is ISO 14443-B.

The usage factor is extremely large for personal portable terminals, such as the use of portable telephones or PDAs for the acquisition of a variety of information over the Internet. On the other hand, a contactless card terminal like a prepaid card, which is also called a secure card, provides high reliability because the basis on which balance information is stored is that security is guaranteed. Further, a combination comprising a portable telephone and a contactless card terminal has been developed whereby communication with a card reader/writer (a local server is the party for communicating with a contactless card terminal), with which the portable telephone cannot originally communicate, is performed through the communication function provided for the contactless card terminal (see patent document 2).

### [Patent Document 1]

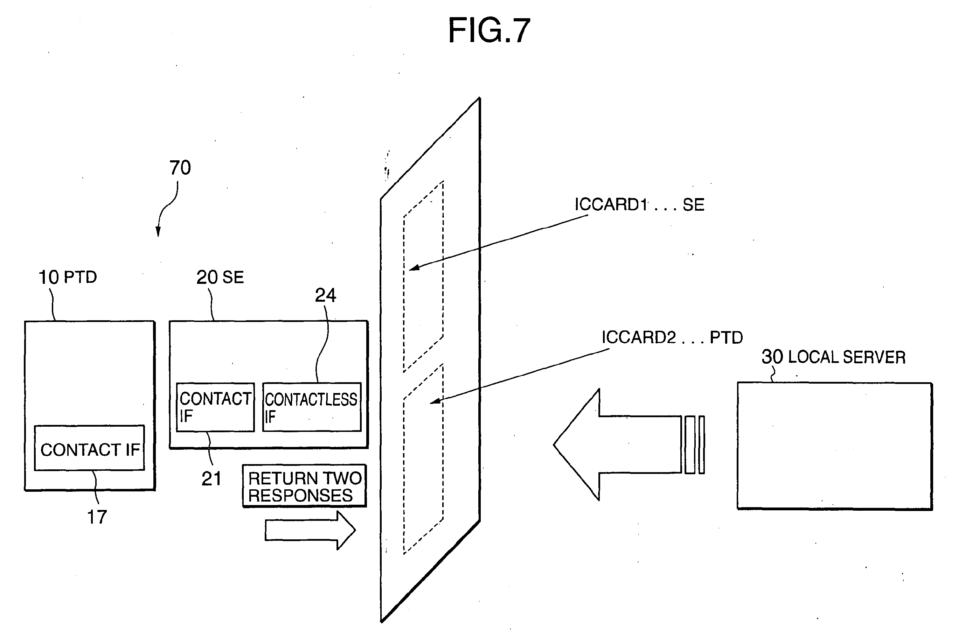

Japanese Patent Laid-Open Publication No. 2000-172806 (Fig. 7, and paragraphs [0002] to [0004])

### [Patent Document 2]

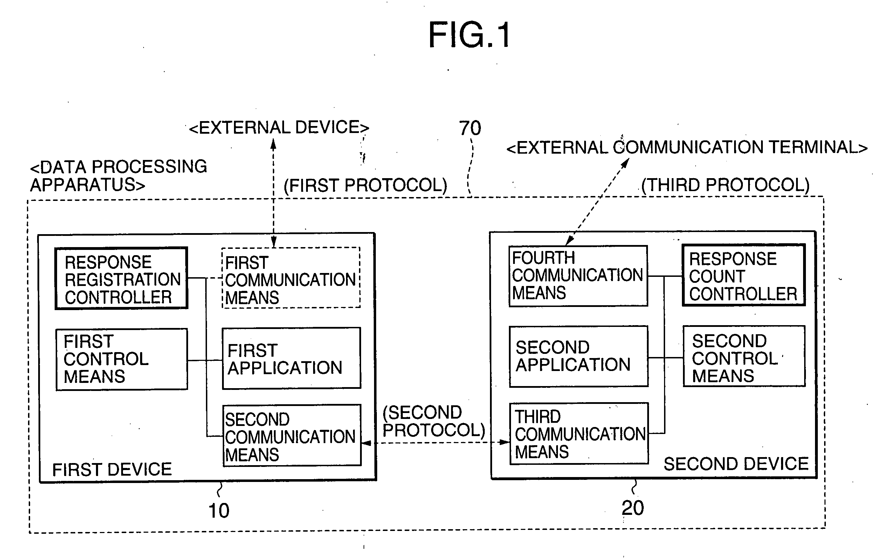

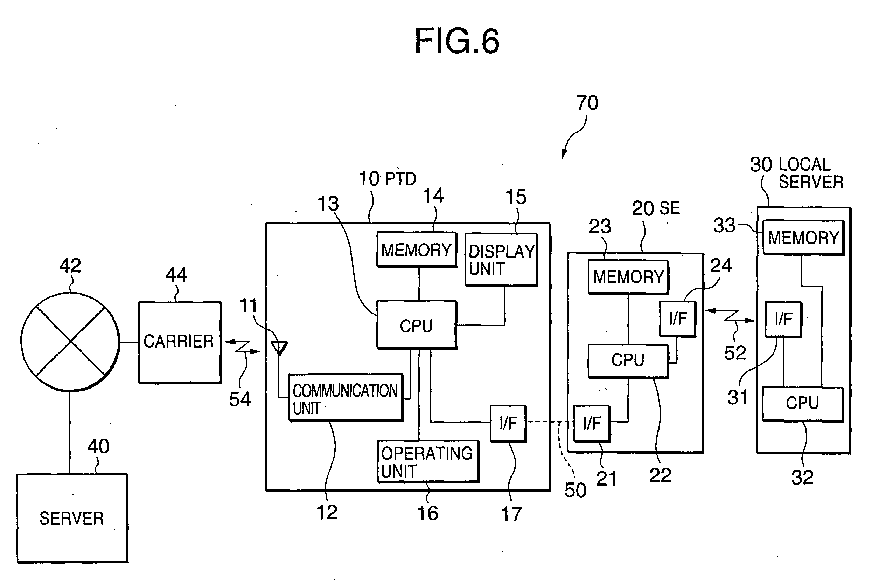

Japanese Patent Laid-Open Publication No. 2000-341763 (Figs. 1 and 6, and [Abstract])

However, a wireless communication system disclosed in patent document 2 merely uses a contactless card terminal to perform communication between a portable telephone and a card reader/writer. That is, the wireless communication system in patent document 2 employs a contactless card terminal to provide communication with the card reader/writer, disregarding the portable telephone, and as a result, the card reader/writer is not permitted to employ for communication the unique functions available with the contactless card terminal (e.g., a prepaid function).

In addition to this shortcoming, when a hybrid portable communication terminal is employed to communicate with a card reader/writer (a local server), the local server cannot determine whether a party to the communication is a portable telephone or a contactless card terminal.

In order for the local server to identify a party to the communication, a method may be employed that allocates a channel for each terminal. However, according to this method, the ISO standard must be changed to alter the function of the local server, and for communication between the local server and a plurality of terminals (a portable telephone and a contactless card terminal), the same channel will be overlapped merely by allocating the channels for these terminals.

Therefore, it is one objective of the present invention to provide a hybrid apparatus, obtained by combining a portable telephone and a contactless card terminal, wherein, when application programs for a plurality of terminals, such as a portable telephone and a contactless card terminal, are employed together, communication with an external device is enabled in accordance with a desired protocol and by using an application program required for a service, and wherein a local server can identify each communication party terminal without changing the function of an external card reader/writer that is defined by the standard for the local server. It should be noted that, in this invention, "hybrid" means a state wherein two communication terminals, employing a plurality of different communication protocols, are detachable or are integrally coupled, while the two terminals can communicate with each other. Hereinafter, an explanation will be given by using, as an example hybrid portable communication terminal, an apparatus wherein a mobile device, such as a portable telephone or a PDA, is connected to a card, such as an IC card. However, the hybrid portable communication terminal is not limited to this apparatus.

To achieve this objective, according to the present invention, a hybrid portable communication terminal, which is an assembly consisting of terminals having different communication systems, can selectively employ, as needed, both an application program for a portable telephone and an application program that performs various data processes through contactless communication, at close range, with an external communication terminal. Further, the hybrid portable communication terminal transmits to the local server data for each terminal to be registered, so that the local server can allocate a terminal ID for each terminal in order to identify a terminal that is a party to the communication. Furthermore, when a terminal ID is not only allocated for the terminal devices (a portable telephone and a contactless card terminal) in the hybrid portable communication terminal, but also for a predetermined server that is communicating with the hybrid portable communication terminal, the local server can also identify which terminal is a party to the communication.

Specifically, according to a first aspect of the invention, a data processing apparatus, such as a hybrid portable communication terminal, comprises:
a first device; and
a second device detachably or fixedly connected to the first device,
wherein the first device includes
a response registration controller,
second communication means for communicating with the second device,
first storage means for storing a first application, and
first control means for executing the first application, and for controlling the response registration controller, the second communication means and the first storage means,
wherein the second device includes
a response count controller,
third communication means for communicating with the first device,
fourth communication means for communicating with an external communication terminal,
second storage means for storing a second application, and
second control means for executing the second application and for controlling the response count controller, the third communication means, the fourth communication means and the second storage means,
wherein, for communication with the external communication terminal effected through the second communication means, the third communication means and the fourth communication means, the response registration controller exerts influence on the second control means to convince the external communication terminal that the first device is a party to a direct communication for the external communication terminal, and
wherein, for communication with the external communication terminal effected through the fourth communication means, when a request for the detection of a communication party is received from the external communication terminal, the response count controller transmits to the external communication data a response consisting of data indicating the second device, and when the influence is exerted by the first control means, transmits to the external communication terminal a response consisting of data indicating the first device.

With this arrangement, the application program for the first device, such as a portable terminal, and the application program of the second device, such as a secure card, can be combined for use, or either program can be selected to perform a desired process at high speed. Further, a local server can identify each terminal constituting a data processing apparatus, such as a hybrid portable communication terminal.

According to a second aspect of the invention, a data processing apparatus, such as a hybrid portable communication terminal, comprises:
a first device; and
a second device detachably or fixedly connected to the first device,
wherein the first device includes
a response registration controller,
second communication means for communicating with the second device,
third communication means for communicating with an external communication terminal,
first storage means for storing a first application, and
first control means for executing the first application, and for controlling the response registration controller, the second communication means, the third communication means and the first storage means,
wherein the second device includes
a response count controller,
fourth communication means for communicating with the first device,
second storage means for storing a second application, and
second control means for executing the second application and for controlling the response count controller, the fourth communication means and the second storage means,
wherein, for communication with the external communication terminal effected through the fourth communication means, the second communication means and the third communication means, the response registration controller exerts influence on the first control means to convince the external communication terminal that the second device is a party to a direct communication for the external communication terminal, and
wherein, for communication with the external communication terminal effected through the third communication means, when a request for the detection of a communication party is received from the external communication terminal, the response count controller transmits to the external communication terminal a response consisting of data indicating the second device, and when the influence is exerted by the second control means, transmits to the external communication terminal a response consisting of data indicating the first device.

With this arrangement, the application program for a portable telephone and the application program of a secure card can be combined for use, or either program can be selected to perform a desired process at high speed. Further, a local server can identify each terminal constituting a data processing apparatus, such as a hybrid portable communication terminal.

According to a third aspect of the invention, a data processing apparatus, such as a hybrid portable communication terminal, comprises:
a first device; and
a second device detachably or fixedly connected to the first device,
wherein the first device includes
a response registration controller,
first communication means for communicating with an external device,
second communication means for communicating with the second device,
first storage means for storing a first application, and
first control means for executing the first application, and for controlling the response registration controller, the first communication means, the second communication means and the first storage means,
wherein the second device includes
a response count controller,
third communication means for communicating with the first device,
fourth communication means for communicating with an external communication terminal,
second storage means for storing a second application, and
second control means for executing the second application and for controlling the response count controller, the third communication means, the fourth communication means and the second storage means,
wherein, for communication with the external communication terminal effected through the second communication means, the third communication means and the fourth communication means, when the first communication means is communicating with the external device, the response registration controller exerts influence on the second control means to convince the external communication terminal that the first device and the external device are parties to a direct communication for the external communication terminal, and
wherein, for communication with the external communication terminal effected through the fourth communication means, when a request for the detection of a communication party is received from the external communication terminal, the response count controller transmits to the external communication terminal a response consisting of data indicating the second device, and when the influence is exerted by the first control means, transmits to the external communication terminal a response consisting of data indicating the first device and the external device.

With this arrangement, the application program for a portable telephone and the application program of a secure card can be combined for use, or either program can be selected to perform a desired process at high speed. Further, a local server can identify each terminal constituting a data processing apparatus, such as a hybrid portable communication terminal, and a server communicating with the portable telephone.

According to a fourth aspect of the invention, a data processing apparatus, such as a hybrid portable communication terminal, comprises:
a first device; and
a second device detachably or fixedly connected to the first device,
wherein the first device includes
a response registration controller,
first communication means for communicating with an external device,
second communication means for communicating with the second device,
third communication means for communicating with an external communication terminal,
first storage means for storing a first application, and
first control means for executing the first application, and for controlling the response registration controller, the first communication means, the second communication means, the third communication means and the first storage means,
wherein the second device includes
a response count controller,
fourth communication means for communicating with the first device,
second storage means for storing a second application, and
second control means for executing the second application and for controlling the response count controller, the fourth communication means and the second storage means,
wherein, for communication with the external communication terminal effected through the fourth communication means, the second communication means and the third communication means, the response registration controller exerts influence on the first control means to convince the external communication terminal that the second device is a party to a direct communication for the external communication terminal, and
wherein, for communication with the external communication terminal effected through the third communication means, when a request for the detection of a communication party is received from the external communication terminal, and when the first communication means is communicating with the external device, the response count controller transmits to the external communication terminal a response consisting of data indicating the first device and the external device, and when the influence is exerted by the second control means, transmits to the external communication terminal a response consisting of data indicating the second device.

With this arrangement, the application program for a portable telephone and the application program of a secure card can be combined for use, or either program can be selected to perform a desired process at high speed. Further, a local server can identify each terminal constituting a data processing apparatus, such as a hybrid portable communication terminal, and a server communicating with the portable telephone.

According to a fifth aspect of the invention, a data processing apparatus, such as a hybrid portable communication terminal, comprises:
a first device; and
a second device detachably or fixedly connected to the first device,
wherein the first device includes
a response registration controller,
first communication means for communicating with an external device,
second communication means for communicating with the second device,
first storage means for storing a first application, and
first control means for executing the first application, and for controlling the response registration controller, the first communication means, the second communication means and the first storage means,
wherein the second device includes
a response count controller,
third communication means for communicating with the first device,
fourth communication means for communicating with an external communication terminal,
second storage means for storing a second application, and
second control means for executing the second application and for controlling the response count controller, the third communication means, the fourth communication means and the second storage means,
wherein, for communication with the external communication terminal effected through the second communication means, the third communication means and the fourth communication means, when the first communication means is communicating with the external device, the response registration controller exerts influence on the second control means to convince the external communication terminal that the external device is a party to a direct communication for the external communication terminal, and
wherein, for communication with the external communication terminal effected through the fourth communication means, when a request for the detection of a communication party is received from the external communication terminal, the response count controller transmits to the external communication terminal a response consisting of data indicating the second device, and when the influence is exerted by the first control means, transmits to the external communication terminal a response consisting of data indicating the external device.

With this arrangement, the application program for a portable telephone and the application program of a secure card can be combined for use, or either program can be selected to perform a desired process at high speed. Further, a local server can identify a secure card terminal constituting a data processing apparatus, such as a hybrid portable communication terminal, and a server communicating with the portable telephone.

According to a sixth aspect of the invention, a data processing apparatus, such as a hybrid portable communication terminal, comprises:
a first device; and
a second device detachably or fixedly connected to the first device,
wherein the first device includes
a response registration controller,
first communication means for communicating with an external device,
second communication means for communicating with the second device,
third communication means for communicating with an external communication terminal,
first storage means for storing a first application, and
first control means for executing the first application, and for controlling the response registration controller, the first communication means, the second communication means, the third communication means and the first storage means,
wherein the second device includes
a response count controller,
fourth communication means for communicating with the first device,
second storage means for storing a second application, and
second control means for executing the second application and for controlling the response count controller, the fourth communication means and the second storage means,
wherein, for communication with the external communication terminal effected through the fourth communication means, the second communication means and the third communication means, the response registration controller exerts influence on the first control means to convince the external communication terminal that the external device is a party to a direct communication for the external communication terminal, and
wherein, for communication with the external communication terminal effected through the third communication means, when a request for the detection of a communication party is received from the external communication terminal, and when the first communication means is communicating with the external device, the response count controller transmits to the external communication terminal a response consisting of data indicating the external device, and when the influence is exerted by the second control means, transmits to the external communication terminal a response consisting of data indicating the second device.

With this arrangement, the application program for a portable telephone and the application program of a secure card can be combined for use, or either program can be selected to perform a desired process at high speed. Further, a local server can identify a secure card terminal constituting a data processing apparatus, such as a hybrid portable communication terminal, and a server communicating with the portable telephone.

According to a seventh aspect of the invention, for the data processing apparatus, such as a hybrid portable communication terminal, according to one of the first to sixth aspects, when the first device, such as the portable terminal, is powered on, the response registration controller transmits a registration request to the response count controller.

With this configuration, the registration request can be automatically transmitted by powering on the portable terminal.

According to an eighth aspect of the invention, for the data processing apparatus according to one of the third to sixth aspects, when the first device communicates with the external device through the first communication means, the response registration controller transmits to the response count controller a registration request for the external device.

With this arrangement, upon receiving a registration request from an external device, such as a predetermined server, the registration request can be automatically transmitted to the response count controller.

According to a ninth aspect of the invention, the data processing apparatus, such as a hybrid portable communication terminal according to the eighth aspect, when communication with the external device, such as a predetermined server, is disabled, the response registration controller transmits, to the response count controller, a registration request that includes data other than data indicating the external device.

With this configuration, a different number of registration requests can be automatically transmitted to the response count controller, depending on whether the portable terminal is located within the communication enabled range. Further, the application program for the secure card can be used in addition or can be selected to perform a desired process at high speed, and the local server can identify each terminal.

According to a tenth aspect of the invention, for the data processing apparatus, such as a hybrid portable communication terminal according to one of the first to the sixth aspects, the response count controller includes:
device management means for identifying and managing a device from which the registration request has been received;
device identification generation means for, upon receiving the registration request, generating arbitrary identification information (e.g., a random number);
comparison means for determining whether the same identification information as the identification information generated by the device identification information generation means is present in the device management means; and
registration means for, upon receiving the registration request, registering as new a identification registration the identification information that is not present in the device management means.

With this arrangement, the overlap registration of different terminals using the same identification information can be effectively prevented.

According to an eleventh aspect of the invention, for the data processing apparatus, such as a hybrid portable communication terminal according to one of the first to the sixth aspects, the response count controller includes:
device management means for identifying and managing a device from which the registration request is received;
comparison means for, upon the reception of the registration request, determining whether the same information as either information (e.g., an arbitrary number, numerical value or symbol, inherent information provided during manufacture or transport) provided by the device that has issued the registration request, or information obtained using the information is present in the device management means; and
registration means for when, upon the reception of the registration request, the same information is not present in the device management means, registering as new information the information or information obtained from the information, and for, when the same information is present in the device management means, registering, as new information, information that is not present in the device management means.

With this arrangement, the overlapping registration of different terminals using the same identification information can be effectively prevented.

According to a twelfth aspect of the invention, the first device according to one of the first to eleventh aspects is provided.

With this arrangement, when the first device is employed with the second device, the application programs for these two can cooperate with each other.

According to a thirteenth aspect of the invention, the second device according to one of the first to eleventh aspects is provided.

With this arrangement, when the second device is employed with the first device, the application programs for these two can cooperate with each other.

Exemplary embodiments of the invention will be described below with reference to the accompanying drawings, in which:
Fig. 1 is a block diagram showing a basic configuration A for a data processing apparatus according to the present invention;
Fig. 2 is a block diagram showing a basic configuration B for the data processing apparatus according to the present invention;
Fig. 3 is a schematic diagram showing the management table of the response count controller of the data processing apparatus of the invention after a registration request has been issued;
Fig. 4 is a schematic diagram showing the management table of the response count controller of the data processing apparatus of the invention after a card detection process has been performed;
Fig. 5 is a schematic diagram showing the relationship between the basic structure for a hybrid portable communication terminal according to the invention and a local server that communicates with the hybrid portable communication terminal;
Fig. 6 is a block diagram showing a hybrid portable communication terminal according to a first embodiment of the present invention;
Fig. 7 is a schematic diagram that, as well as Fig. 5, shows the first embodiment in Fig. 6;
Fig. 8 is a sequence chart showing a method whereby the hybrid portable communication terminal of the first embodiment is employed to cause the local server to identify a PTD and an SE;
Fig. 9 is a schematic diagram showing the communication between a PTD and an SE to cause a local server to identify the terminal, and a PUPI management table that is included in the response count controller of a device 1 (an SE in the first embodiment);
Fig. 10 is a flowchart showing a method for preventing the overlapping of a PUPI to be registered in the PUPI management table in Fig. 9;
Fig. 11 is a schematic diagram showing another method for preventing the overlapping of a PUPI to be registered in the PUPI management table in Fig. 9;
Fig. 12 is a sequence chart showing an example timing for the issue of a registration request by a device 2 to a device 1 shown in Figs. 9 and 11;
Fig. 13 is a sequence chart showing another example timing for the issue of a registration request by the device 2 to the device 1 shown in Figs. 9 and 11;
Fig. 14 is a sequence chart showing an additional example timing for the issue of a registration request to the device shown in Figs. 9 and 11;
Fig. 15 is a schematic diagram that, as well as Fig. 5, shows a hybrid portable communication terminal according to a second embodiment of the invention;
Fig. 16 is a block diagram showing the hybrid portable communication terminal according to the second embodiment of the invention;
Fig. 17 is a schematic diagram that, as well as Fig. 5, shows a hybrid portable communication terminal according to a third embodiment of the invention;
Fig. 18 is a schematic diagram that, as well as Fig. 5, shows a hybrid portable communication terminal according to a fourth embodiment of the invention;
Fig. 19 is a schematic diagram that, as well as Fig. 5, shows a hybrid portable communication terminal according to a fifth embodiment of the invention;
Fig. 20 is a schematic diagram that, as well as Fig. 5, shows a hybrid portable communication terminal according to a sixth embodiment of the invention;
Fig. 21 is a schematic diagram showing an example usage 1 for the hybrid portable communication terminal according to the present invention;
Fig. 22 is a sequence chart showing an example usage 2 for the hybrid portable communication terminal according to the present invention;
Fig. 23 is a schematic diagram showing an example usage 3 for the hybrid portable communication terminal according to the present invention; and
Fig. 24 is a sequence chart showing the operation of the example usage 3 in Fig. 23.

While referring to Figs. 1 to 24, an explanation will now be given for basic configurations for a hybrid portable communication terminal serving as a data processing apparatus according to the present invention, the preferred embodiments and example usages of this terminal. The same reference numerals are employed to denote identical or corresponding components to avoid an overlapping explanation.

### <Basic Configuration A>

A basic configuration A for the data processing apparatus of the invention is shown in a block diagram in Fig. 1. A data processing apparatus 70 includes a first device 10 and a second device 20. While referring to Fig. 1, a description of the basic configuration A will now be given. And while the first device 10, which is connected to the second device 20 including fourth communication means that serves as an interface with an external communication terminal, does not have a direct interface with the external communication terminal, the first device 10 (and further, an external device that communicates with the first device 10 through first communication means) communicates with the external communication terminal.

In Fig. 1, the data processing apparatus 70 comprises: the first device 10 and the second device 20, which is detachably or fixedly connected to the first device 10.

The first device 10 includes: a response registration controller; first communication means (e.g., an antenna for wireless communication with a server) for performing communication in accordance with a first protocol; second communication means (e.g., a contact I/F for exchanging data with the second device 20) for performing communication in accordance with a second protocol; first storage means (e.g., a portable application) for storing a first application; and first control means (e.g., the CPU of the first device 10) for executing the first application and for controlling the response registration controller, the first communication means, the second communication means and the first storage means.

The second device 20 (e.g., an IC card) includes: a response count controller; third communication means (e.g., a contact I/F for exchanging data with the first device 10) for communicating with the first device 10 in accordance with the second protocol; fourth communication means (e.g., a contactless I/F for performing close-range communication with an external communication terminal, such as a ticket examination machine or a POS); second storage means (e.g., a card application) for storing a second application program; and second control means (e.g., the CPU of the second device 20) for executing the second application program and for controlling the response count controller, the third communication means, the fourth communication means and the second storage means.

The response registration controller of the first device 10 and the response count controller of the second device 20 will now be described.

### (1) Case wherein the first device 10 does not communicate with an external device (the first communication means is not especially required)

To communicate with the external communication terminal through the second communication means, the third communication means and the fourth communication means, the response registration controller exerts an influence on the second control means to convince the external communication terminal that the first device 10 is the direct communication party for the external communication terminal.

On the other hand, to communicate with the external device through the fourth communication means, upon receiving a request from the external communication terminal to detect a communication party, the response count controller responds by transmitting to the external communication terminal data indicating the second device 20, and when influence is exerted by the first control means, responds by transmitting to the external communication terminal data indicating the first device 10.

For example, when the first device 10 is a PDA and the second device 20 is an IC card, and when the PDA and the IC card are connected together, the response registration controller of the PDA exerts influence on the response count controller of the IC card, so that, even when only the IC card includes an interface with the external communication terminal, upon receiving a detection request from the external communication terminal, the IC card can transmit information (e.g., an address indicating a transmission destination) indicating the presence not only of the IC card but also of the PDA. Therefore, hereinafter, the external communication terminal can use this information to communicate with the PDA.

### (2) Case wherein the first device 10 communicates with an external device (the first communication means is required)

To communicate with the external communication terminal through the second communication means, the third communication means and the fourth communication means, when the first communication means is communicating with an external device, the response registration controller exerts an influence on the second control means to convince the external communication terminal that the first device 10 and the external device are the direct communication parties for the external communication terminal.

On the other hand, to communicate with the external device through the fourth communication means, upon receiving a request from the external communication terminal to detect a communication party, the response count controller responds by transmitting to the external communication terminal data indicating the second device 20, and when influence is exerted by the first control means, responds by transmitting to the external communication terminal data indicating the first device 10 and the external device.

For example, when the first device 10 is a portable telephone and the second device 20 is an IC card, and when the portable telephone and the IC card are connected together, and when the portable telephone is communicating with a server across a network, the response registration controller of the portable telephone exerts influence on the response count controller of the IC card (notification of the presence of the portable telephone and the server), so that, even when only the IC card includes an interface with the external communication terminal, upon receiving a detection request from the external communication terminal, the IC card can transmit information (e.g., an address indicating transmission destinations) indicating the presence not only of the IC card but also the portable telephone and the server. Therefore, hereinafter, the external communication terminal can use this information to communicate with the portable telephone and the server.

In this case, when communication between the external communication terminal and the portable telephone is not performed or is not desired, the response registration controller need transmit only the information related to the server to the response count controller.

### <Basic Configuration B>

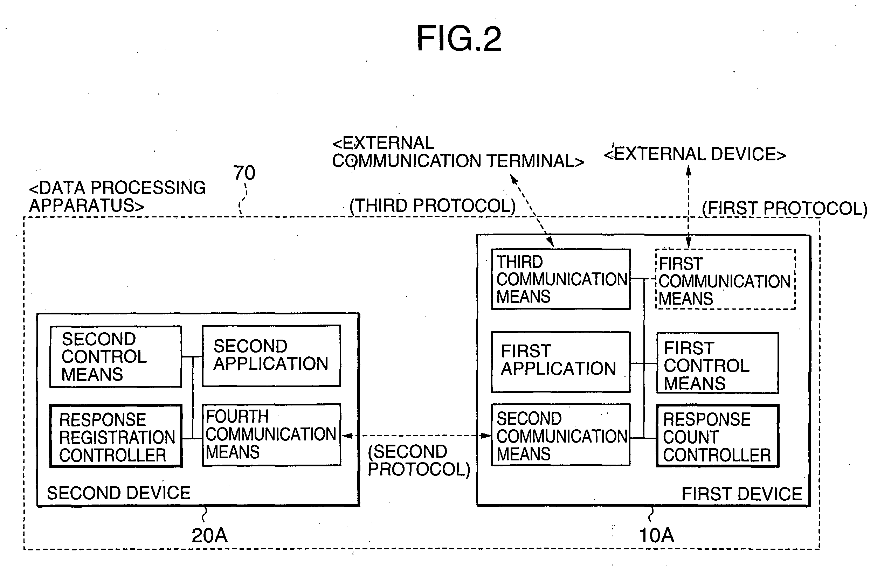

A basic configuration B for the data processing apparatus of the invention is shown in a block diagram in Fig. 2. A data processing apparatus 70 includes a first device 10A and a second device 20A. While referring to Fig. 2, a description of the basic configuration B will now be given. And while the second device 20A, which is connected to the first device 10A including third communication means that serves as an interface with an external communication terminal, does not have a direct interface with the external communication terminal, the second device 20A communicates with the external communication terminal.

In Fig. 2, the data processing apparatus 70 comprises: the first device 10A and the second device 20A, which is detachably or fixedly connected to the first device 10A.

The first device 10A includes: a response registration controller; first communication means (e.g., an antenna for wireless communication with a server) for performing communication in accordance with a first protocol; second communication means (e.g., a contact I/F for exchanging data with the second device 20A) for performing communication in accordance with a second protocol; third communication means (e.g., a contactless I/F for performing close-range communication with an external terminal, such as a ticket examination machine or a POS) for performing communication in accordance with a third protocol; first storage means (e.g., a portable application) for storing a first application; and first control means (e.g., the CPU of the first device 10A) for executing the first application and for controlling the response registration controller, the first communication means, the second communication means, the third communication means and the first storage means.

The second device 20A (e.g., an IC card) includes: a response count controller; fourth communication means (e.g., a contact I/F for exchanging data with the first device 10A) for communicating with the first device 10A in accordance with the second protocol; second storage means (e.g., a card application) for storing a second application program; and second control means (e.g., the CPU of the second device 20A) for executing the second application program and for controlling the response count controller, the fourth communication means and the second storage means.

The response registration controller of the second device 20A and the response count controller of the first device 10A will now be described.

### (3) Case wherein the first device 10A does not communicate with an external device (the first communication means is not especially required)

To communicate with the external communication terminal through the fourth communication means, the second communication means and the third communication means, the response registration controller exerts an influence on the first control means to convince the external communication terminal that the second device 20A is the direct communication party for the external communication terminal.

On the other hand, to communicate with the external device through the third communication means, upon receiving a request from the external communication terminal to detect a communication party, the response count controller responds by transmitting to the external communication terminal data indicating the first device 10A, and when influence is exerted by the second control means, responds by transmitting to the external communication terminal data indicating the second device 20A.

For example, when the first device 10A is a PDA and the second device 20A is an IC card, and when the PDA and the IC card are connected together, the response registration controller of the IC card exerts influence on the response count controller of the PDA, so that, even when only the PDA includes an interface with the external communication terminal, upon receiving a detection request from the external communication terminal, the PDA can transmit information (e.g., an address indicating a transmission destination) indicating the presence not only of the PDA but also of the IC card. Therefore, hereinafter, the external communication terminal can use this information to communicate with the IC card.

### (4) Case wherein the first device 10A communicates with an external device (the first communication means is required)

To communicate with the external communication terminal through the fourth communication means, the second communication means and the third communication means, the response registration controller exerts an influence on the first control means to convince the external communication terminal that the second device 20A is a direct communication party for the external communication terminal.

On the other hand, to communicate with the external device through the third communication means, upon receiving a request from the external communication terminal to detect a communication party, when the first communication means is communicating with the external device, the response count controller responds by transmitting to the external communication terminal data indicating the first device 10A and the external device, and when influence is exerted by the second control means, responds by transmitting to the external communication terminal data indicating the second device 20A.

For example, when the first device 10A is a portable telephone and the second device 20A is an IC card, and when the portable telephone and the IC card are connected together, and when the portable telephone is communicating with a server across a network, the response registration controller of the IC card exerts influence on the response count controller of the portable telephone, so that, even when only the portable telephone includes an interface with the external communication terminal, upon receiving a detection request from the external communication terminal, the portable telephone can transmit information (e.g., an address indicating transmission destinations) indicating the presence not only of the portable telephone but also the IC card. Therefore, hereinafter, the external communication terminal can use this information to communicate with the IC card.

In this case, when in response to the detection request the portable telephone transmits the information indicating the presence of a server, the external communication terminal can also communicate with the server. In addition, when communication between the external communication terminal and the portable telephone is not desired (access to the information for the portable telephone is not desired), or when communication is not performed (the portable telephone acts merely as a pipe for the passage of data), the response registration controller need only transmit the information related to the server to the response count controller.

### <Explanation of the Overview of a Management Table>

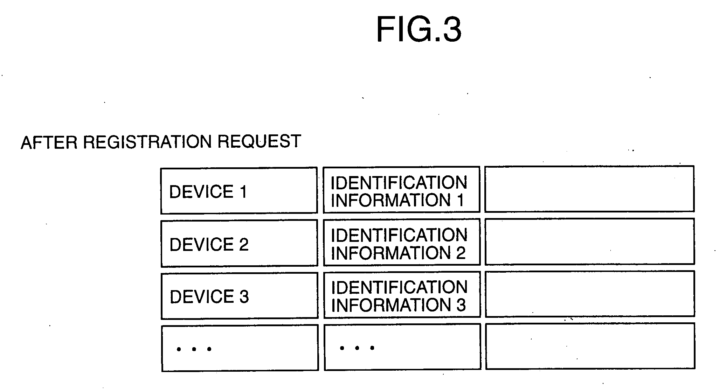

A brief explanation will now be given for a method for managing device identification information to cope with a request that the number of responses be registered. As is shown in Fig. 3, when the registration requests are received from a device 1, a device 2 and a device 3, the response count controller registers, in the management table, information specifying a device (e.g., an IP address and a device ID) and identification information corresponding to the device.

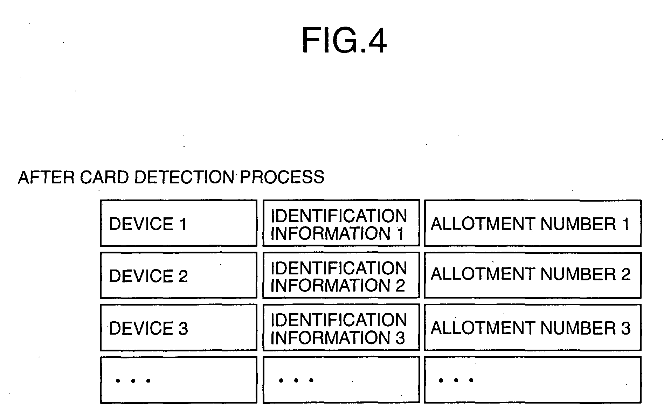

Next, during the card detection process, an allotment number allocated by the external communication terminal is temporarily stored in the management table. For example, in Fig. 4, allotment number 1 is allocated for identification information 1, allotment number 2 is allocated for identification information 2, and allotment number 3 is allocated for identification information 3.

Thereinafter, in the data communication, the allotment number included in the command header and the management table can be employed to determine which device it is for which a command is issued by the external communication terminal.

Instead of the allotment numbers in Fig. 4 being generated by the external communication terminal, the identification information transmitted by the data processing apparatus during the detection process may be employed for a succeeding data communication.

### <Explanation of an Overview of Multiple Connections>

In the basic configuration A (Fig. 1), to simplify the explanation, only one first device 10A is connected to the second device 20A. However, a plurality of first devices 10A can also be connected using various connection forms that are available. For example, the second device 20 includes a plurality of card slots that together constitute means for connecting the first devices 10A, and the IC cards (of a detachable connection type) are loaded into these slots. Or, a plurality of cards (of a fixed connection type) are installed in the data processing apparatus and are fixedly connected to the second device 20A. Or, these types may be employed together (one or more detachable connection types and one or more fixed connection types).

When devices connected to the second device 20A have a function equivalent to that of the first device 10A, these devices need only exert influence on the response count controller to be registered. Therefore, the external communication terminal can identify the devices that correspond to the first device 10A, regardless of how many devices are connected.

Similarly, in the basic configuration B (Fig. 2), a plurality of second devices 20A may be connected to the first device 10A.

An overview of the basic configurations for the present invention has been presented. An explanation will now be given using a specific example and during the course of the employment of the preferred embodiments for the data processing apparatus of the invention, provided as a hybrid portable communication terminal.

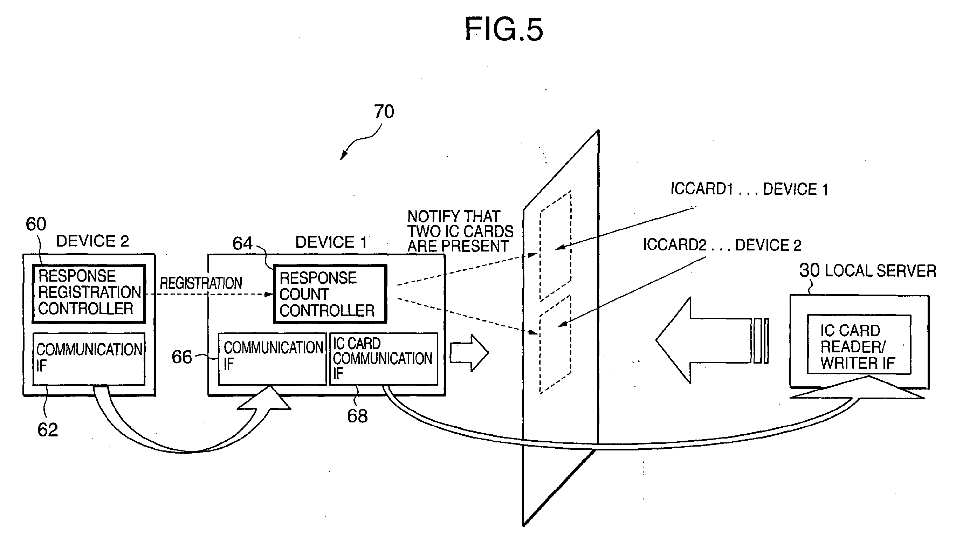

First, while referring to Fig. 5, an explanation will be given for the configuration of a hybrid portable communication terminal as the data processing apparatus according to the present invention, and the relationship with a local server that communicates with the hybrid portable communication terminal. In Fig. 5, a local server 30 is an IC card reader/writer (also simply called a card reader/writer) that can communicate with a contactless card terminal, and a hybrid portable communication terminal 70 includes a device 1 and a device 2, which are a portable telephone and a contactless card terminal (or vice versa). The device 2 includes a response registration controller 60 and a communication interface (I/F) 62, while the device 1 includes a response count controller 64, a communication interface (I/F) 66 and an IC card communication interface 68.

The device 1 can communicate directly with the local server 30 through the IC card communication interface 68, and the device 2 can communicate with the local server 30 only through the device 1. When the response registration controller 60 transmits a predetermined registration request command to the response count controller 64 to register itself (the device 2), the response count controller 64 responds to the IC cards loaded into the device 1 and into the device 2 upon the reception of the card detection request from the local server 30. Therefore, since the local server 30 identifies the two IC cards (ICCard1 and ICCard2), the local server 30 can allocate terminal IDs for these cards.

### <First Embodiment>

A First embodiment of the present invention will now be described while referring to Fig. 6. Fig. 6 is a diagram showing the hardware configuration for the first embodiment, and the peripheral arrangement. In Fig. 6, a hybrid portable communication terminal for this invention comprises: a personal trusted device (PTD) 10 and a secure card terminal (SE) 20. A modification of a portable terminal for a well known cellular phone system (including a portable telephone and a PHS) can be employed as the personal trusted device 10. Further, a modification of a so-called contactless IC card that employs a close-range electromagnetic induction communication system can be employed as the secure card terminal 20. In this invention, the personal trusted device 10 is referred to simply as the PTD 10, and the secure card 20 is referred to simply as the SE 20. The PTD 10 in Fig. 6 corresponds to the device 2 in Fig. 5, and the SE 20 in Fig. 6 corresponds to the device 1 in Fig. 5.

In Fig. 6, a server 40 is a predetermined data supply source/data processing apparatus to which the PTD 10 can be connected through the facility of a carrier 44, which is a communication provider, and the Internet 42. Since the arrangement from the server 40 to the carrier 44 constitutes a conventional system, no detailed explanation for it will be given. The local server 30 in Fig. 6 is an external communication terminal and employs the above described close-range electromagnetic induction communication system. The local server 30, which serves as an external communication terminal, is the same as a contactless (or light-contact) communication terminal for an IC card provided, for example, at a ticket gate in a station. The local server 30 includes a memory 33 in which a program and data are stored, an interface (I/F) 31, and a CPU (Central Processing Unit) for controlling these components.

The PTD 10 includes: an antenna 11, in addition to one for a portable telephone; a communication unit 12; a CPU 13; a memory 14; a display unit 15; and an operating unit 16, provided in order to execute the basic functions of a common portable telephone or portable terminal. The antenna 11, the communication unit 12, the memory 14, the display unit 15 and the operating unit 16 are all connected to the CPU 13 (a bus line and an interface are employed for the actual connections for these components). A battery is not shown in Fig. 6, although one is incorporated. The PTD 10 also includes an interface (I/F) 17, connected to the CPU 13, in addition to the configuration of a conventional portable telephone. This interface 17 is used for communication with the SE 20.

The SE 20 includes: an interface (I/F) 24 that incorporates a coil antenna and a communication unit, as does a well known contactless IC card; a CPU 22; and a memory 23, all of which are provided in order to execute the basic functions of a common contactless IC card. The interface 24 and the memory 23 are connected to the CPU 22 (a bus line and an interface are employed for the actual connections of these components). The SE 20 also includes an interface (I/F) 21, connected to the CPU 22, in addition to the configuration of a conventional contactless IC card. This interface 21 is used for communication with the PTD 10. Further, since a conventional secure card is passively operated when, upon the reception of an external electric wave, power is generated by the coil antenna through electromagnetic induction, the secure card generally does not include a battery. In this embodiment, the SE 20 receives power from the PTD 10 through a connection line (not shown), so that the SE 20 can be actively operated, as will be described later. Furthermore, when needed, a battery can be incorporated in the SE 20.

The SE 20 can be provided either fixed to or detachable from the casing (not shown) of the PTD 10. Since wired communication is performed between the PTD 10 and the SE 20, for communication with the SE 20, which is fixedly provided, a connection cable indicated by a broken line 50 must be extended between the interface 17 and the interface 21. For communication with the SE 20, which is detachable, the contact portion of the cable 50 must be provided for the detachable portion, and when the SE 20 is mounted on the casing of the PTD 10, the interface 17 and the interface 21 can be interconnected.

OSes and application programs for controlling the operation of the CPUs 13 and 22 are respectively stored in the memory 14 of the PTD 10 and the memory 23 of the SE 20. During actual operation, these application programs are activated and various processes are performed. In Fig. 6, the SE 20 and the local server 30 communicate by using a close-range wireless communication wave (electromagnetic wave) 52, and the PTD 10 and the carrier 44 communicate by using a cellular phone system wireless communication wave 54. The PTD 10 employs the communication unit 12, including a transmitter and a receiver, to communicate with the server 40 through the carrier 44 and the Internet 42 according to a first protocol, such as the well known TCP/IP. Further, the PTD 10 and the SE 20 communicate with each other through the interfaces 17 and 21 in accordance with a second protocol. The SE 20 and the local server 30 communicate with each other in accordance with a third protocol, such as the well known ISO 14443-B.

As the second protocol, an appropriate one is selected from well known conventional protocols, and a modification of the protocol defined by ISO 7816 can be employed. The response registration controller 60 in Fig. 5 is provided by the CPU 13 of the PTD 10, and the response count controller 64 is provided by the CPU 22 of the SE 20. The communication interfaces 62 and 66 in Fig. 5 correspond to the interfaces (I/Fs) 17 and 21 in Fig. 6, and the IC card communication interface 68 in Fig. 5 corresponds to the interface (I/F) 24 in Fig. 6.

Fig. 7 is a schematic diagram that, as well as in Fig. 5, shows the first embodiment shown in Fig. 6. Specifically, the local server 30 identifies the PTD 10 and the SE 20 as individual IC cards. Therefore, when the hybrid portable communication terminal 70 of the invention performs the accounting process with the local server 30, the accounting process that is actually performed by the PTD 10 or the SE 20 in the hybrid portable communication terminal 70 can be assumed to be a common process performed using an IC card.

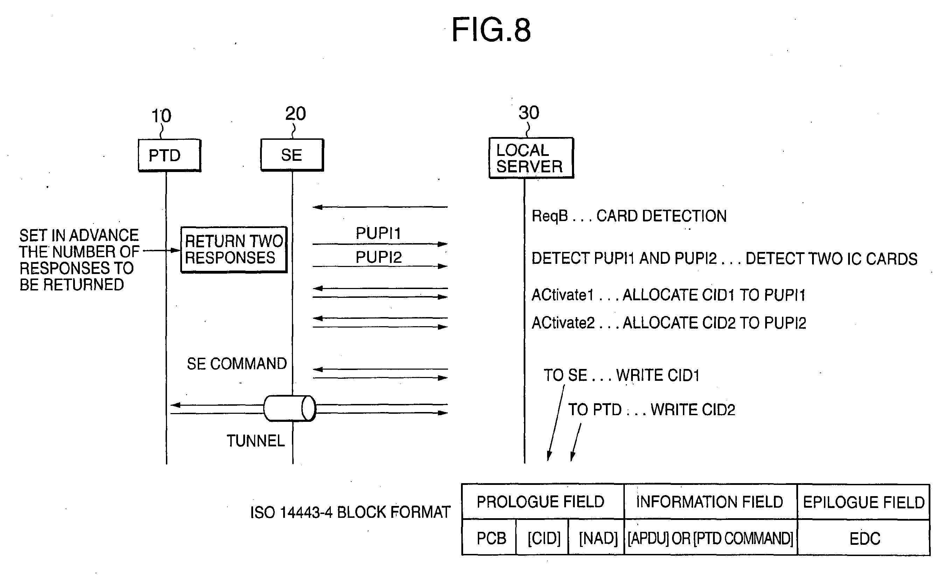

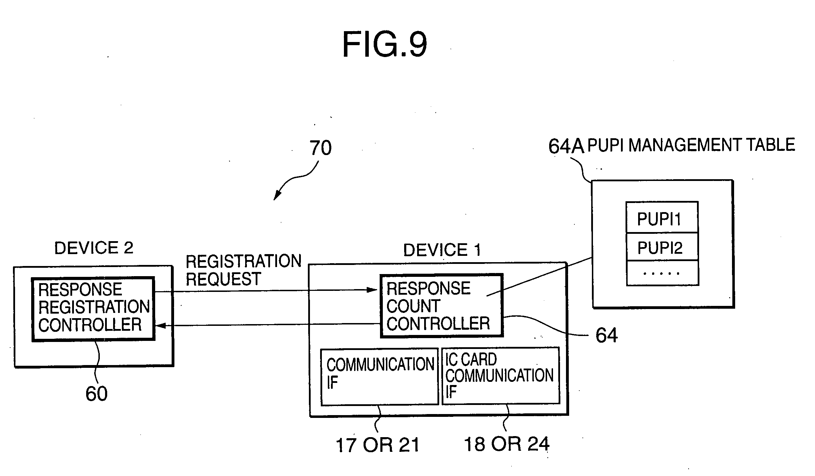

Fig. 8 is a sequence chart showing a method whereby the hybrid portable communication terminal 70 of the first embodiment permits the local server 30 to identify the PTD 10 and the SE 20. Fig. 9 is a schematic diagram showing the communication performed between the PTD 10 and the SE 20 for this identification, and a PUPI management table 64A included in the response count controller of the device 1 (the SE 20 in the first embodiment). The PUPI is a pseudo-unique proximity card identifier of four bytes defined by ISO 14443. First, the local server 30 transmits to the SE 20 a request B (ReqB) for the detection of a card. In this case, it is assumed that the PTD 10 has transmitted, to the SE 20, a request that the number of responses be registered. As is shown in Fig. 9, when the device 2 (PTD 10) transmits a request to the device 1 (SE 20) for the registration of the number of responses, the device 1 registers the PUPI of the device 2 as PUPI2 in the PUPI management table 64A. It should be noted that the PUPI of the device 1 has already been registered as PUPI1 in the PUPI management table 64A. In this case, therefore, two PUPIs are registered.

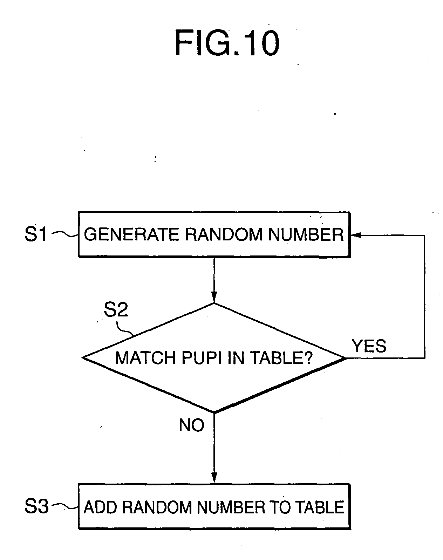

The response count controller 64 needs some device to prevent the overlapping registration of the same PUPI in the PUPI management table 64A. Fig. 10 is a flowchart showing a method for preventing overlapping using a random number. At step S1, a random number is generated, and at step S2, a check is performed to determine whether the random number matches a PUPI that has already been registered in the PUPI management table 64A. When the two match, program control returns to step S1 to repeatedly generate new random numbers until the numbers do not match. When the random number does not match the PUPI at step S2, at step S3 the random number is added to the PUPI registration table 64A.

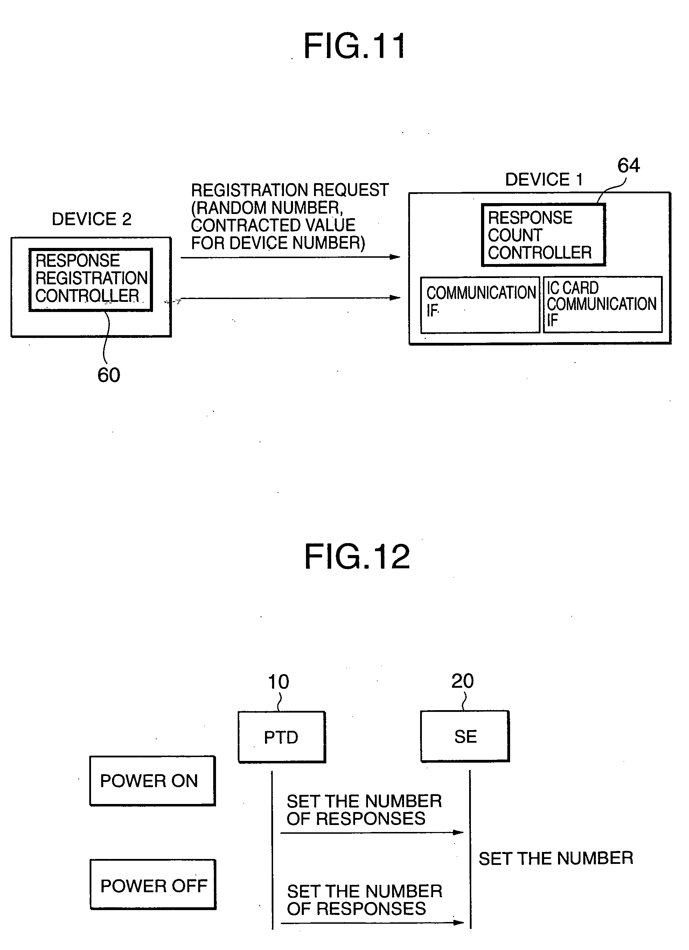

Fig. 11 is a schematic diagram showing a method for determining whether PUPI data externally received match a PUPI that has already been registered in the PUPI management table 64A, and for registering a PUPI that is not matched. The PUPI data that are externally received are a random number generated by the device 2 or another personal computer, the device number of the device 2, and a telephone number or a value obtained using these data (contracted value). When the PUPI data are externally received, or the value obtained from the data matches a PUPI that has already been registered, the response count controller 64 of the device 1 transmits a communication to this effect to the response registration controller 60 of the device 2, and allocates a new PUPI that does not overlap.

Fig. 12 is a sequence chart showing an example timing for the issue of a registration request to the device 1 in Figs. 9 and 11 by the device 2. In the example in Fig. 12, when the power for the PTD 10 is on (ON), a registration request to set the number of cards (the number of responses) is transmitted by the PDT 10 to the SE 20. Then, when the power for the PTD 10 is off (OFF), the number of cards is reset (the number of responses is setup by canceling the registration). Thus, when for the PTD 10 the power-OFF state is detected, the SE 20 cancels the registration.

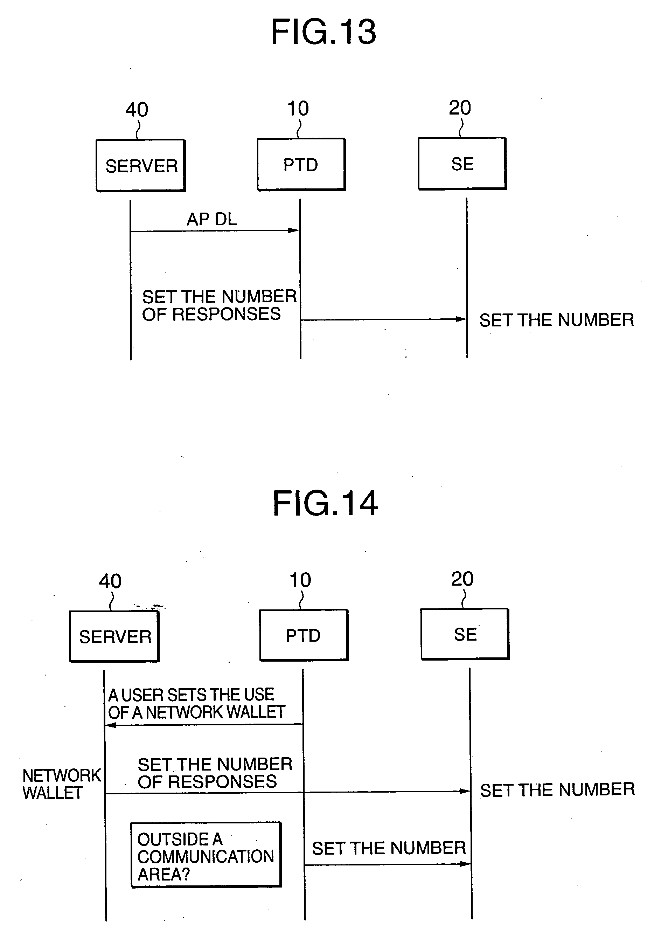

In the example in Fig. 12, the power-ON and power-OFF states are employed as triggers for the registration and the cancellation. Further, as is shown in Fig. 13, the downloading (DL) from a predetermined server 40 of an application program (AP), the activation of the program, or the initial activation, may also be employed as a trigger. Furthermore, if the SE 20 can be detached from the hybrid portable communication terminal 70, the PTD 10 may issue a registration request when the SE 20 is inserted, and may cancel registration when the SE 20 is removed.

Fig. 14 is a sequence chart showing a method for transmitting a registration request to the SE 20 using an application program for the predetermined server 40 that is communicating with the PTD 10. When the PTD 10 transmits, to the server 40, a message that the user intends to use a network wallet, the server 40 activates the pertinent application program, and transmits a registration request command to the SE 20 through the PTD 10. In this case, the PUPI of the PTD 10 and the PIPI of the server 40 are registered in the PUPI management table 64A. When the PTD 10 is present outside the communication area, the PTD 10 cannot communicate with the server 40, and the PTD 10 transmits a command to the SE 20 for the registration of only the PTD 10. Therefore, depending on whether the PTD 10 is present in the communication area, the number of PUPIs registered in the PUPI management table 64A differs.

As another example, the registration and cancellation of the PUPI can also be performed by the application program of the SE 20, or upon the reception of a command from the local server 30.

Referring again to Fig. 8, when the local server 30 transmits a request B (ReqB) to the SE 20 (device 1 in Fig. 9), the SE 20 transmits, to the local server 30, all the PUPIs registered in the PUPI management table 64A. In this case, PUPI1 and PUPI2 are transmitted. Therefore, it is as though the local server 30 had detected two IC cards. Then, through ACtivate1 and ACtivate2, the local server 30 allocates CID1 to PUPI1, and CID2 to PUPI2. The CID is a card identifier for identifying an IC card, and is data positioned in the prologue field shown in a data block format in the lower portion in Fig. 8 that is defined by ISO 14443-4. PCB in the prologue field represents a protocol control byte, NAD represents a node address, APDU, in the information field, represents an application data unit defined by ISO 7816, and EDC, in the epilogue field, represents an error detection code.

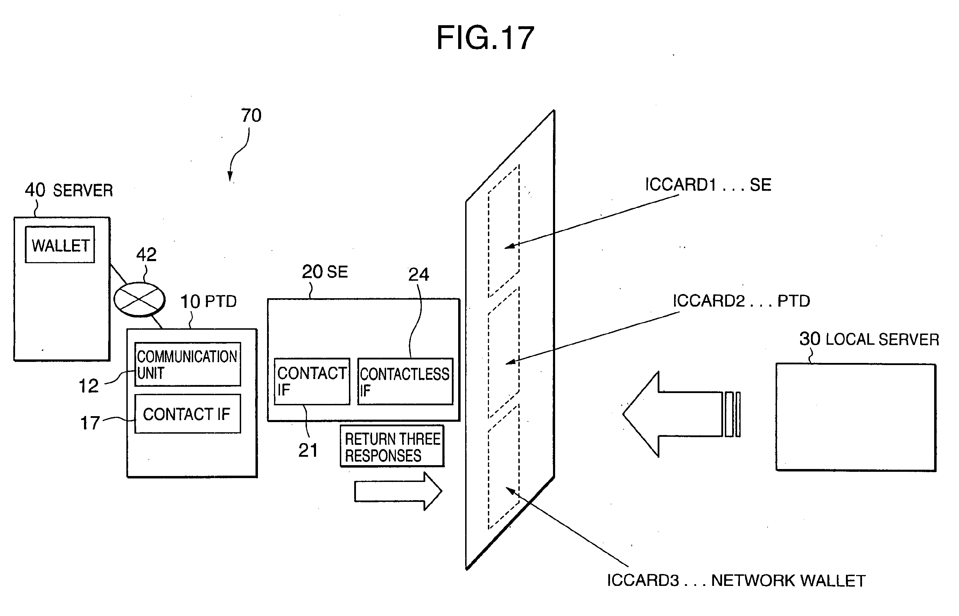

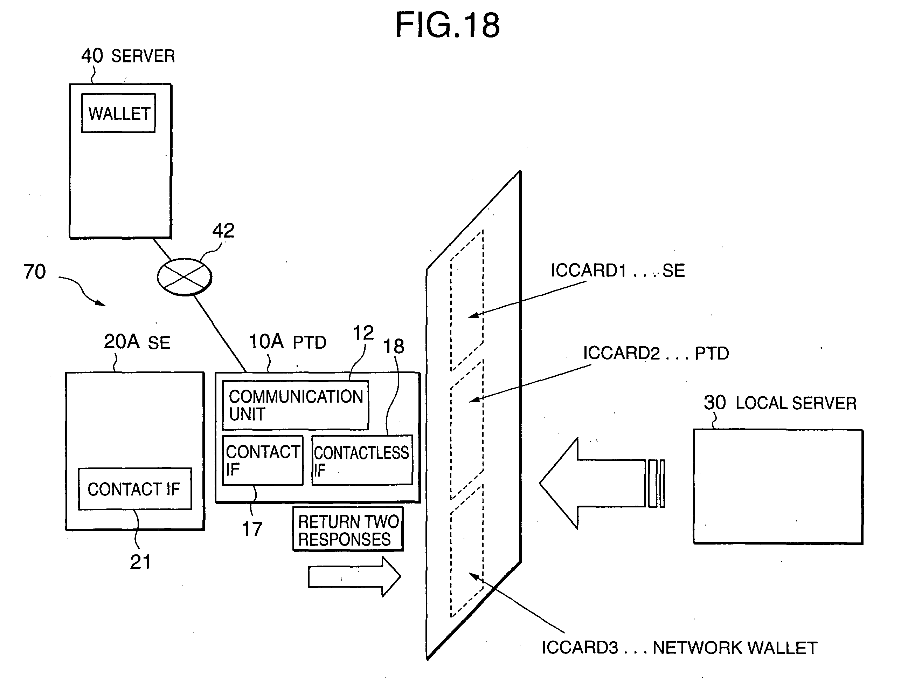

When the CID1 and the CID2 are allocated to the SE 20 and the PTD 10, thereafter, the CID1 is included as the CID in a command to be transmitted by the local server 30 to the SE 20, while the CID2 is included as the CID in the command to be transmitted to the PTD 10. Therefore, the CPU 22 (Fig. 6) of the SE 20 examines the CID in the command received from the local server 20, and when the CID1 is included, the CPU 22 assumes that the command is for the SE 20 and performs the communication. When the CID2 is included in the command received from the local server 30, the CPU 22 assumes that the command is for the PTD 10 and serves as a tunnel for the transmission of this command to the PTD 10, instead of executing the original function of the SE 20. Thereafter, The PTD 10 employs the SE 20 as a tunnel for communicating with the local server 30. On the other hand, when the data are to be transmitted by the PTD 10 to the local server 30, the format wherein the CID2 is written is employed, and when data are to be transmitted by the SE 20 to the local server 30, the format wherein the CID1 is written is employed. Therefore, the local server 30 can easily identify a terminal (regarded as one of the IC cards) by which a signal has been transmitted. The method employed for identifying a terminal using the CID is employed in common by the other, following embodiments. When two or more terminals are present in the embodiments shown in Figs. 17 and 18, CID3, CID4, ... can be allocated in order, following the CID1 and CID2.

### <Second Embodiment>

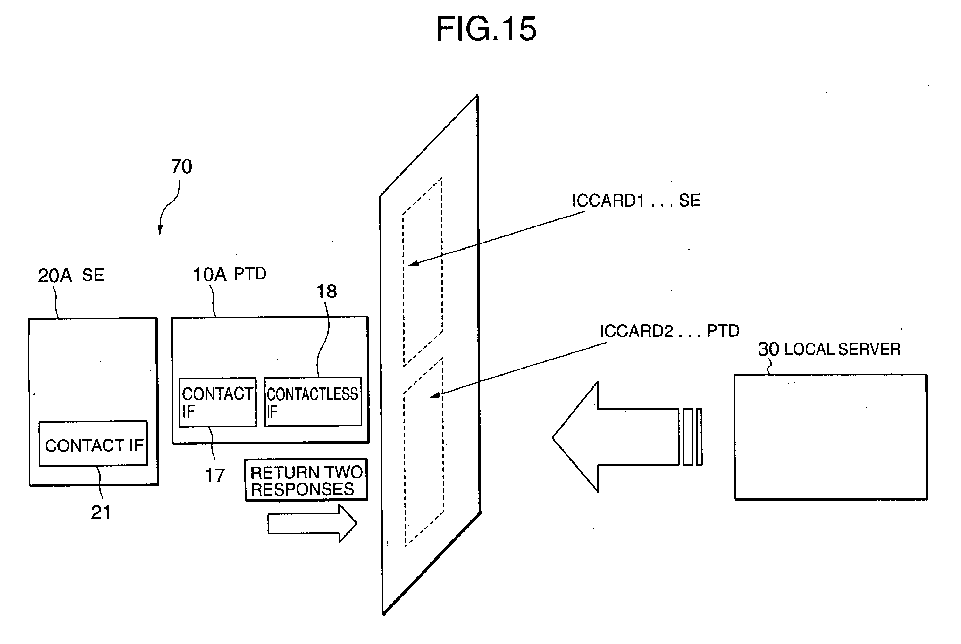

In the first embodiment, the device 1 in Fig. 5 is the SE 20, and the device 2 is the PTD 10, while in a second embodiment, these are inverted. Fig. 15 is a schematic diagram showing the second embodiment, and in the second embodiment, as well as in the first embodiment, a PTD 10A and an SE 20A, which pretend to be IC cards, can communicate with the local server 30.

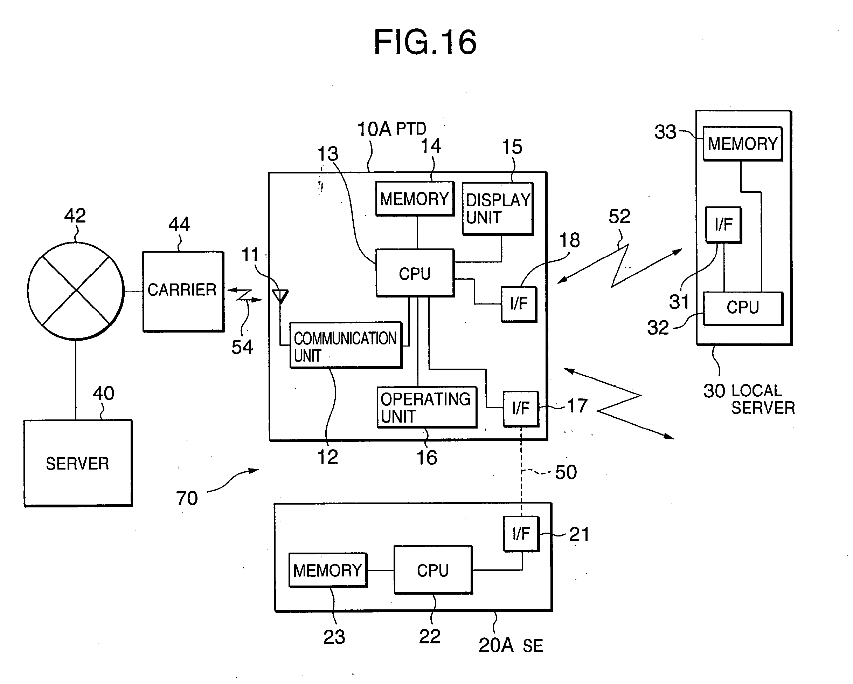

Fig. 16 is a block diagram showing the configuration for the second embodiment, as well as a relevant apparatus. The same reference numerals as are used in Fig. 6 are also employed to denote corresponding components in Fig. 16, and no further explanation for them will be given. The second embodiment in Fig. 16 differs from the first embodiment in Fig. 6 in that, in the first embodiment, the interface 24 for the SE 20 is employed when communicating with the local server 30, which is an external communication terminal, and in the second embodiment, an interface 18 is provided for the PTD 10A for performing close-range contactless communication with a local server 30. The secure card SE 20A in the second embodiment has substantially the same configuration as in the first embodiment, except that a communication interface with the local server 30 is not provided.

Also in the second embodiment, the SE 20A receives power from the PTD 10A. However, the SE 20A can include its own power source, as needed. The PTD 10a employs a communication unit 12 for communicating with a server 40 through a carrier 44, and the Internet 42 in accordance with a well known first protocol. In accordance with a second protocol, the PTD 10A and the SE 20A communicate with each other through interfaces 17 and 21, and in accordance with a third protocol, the PTD 10A and the local server 30 communicate with each other. The second protocol can be an appropriate one selected from among conventional, well known protocols. It should also be noted that the first to the third protocols for the first embodiment can be employed as are those for the second embodiment.

### <Third Embodiment>

In the first and second embodiments, the local server 30 is permitted to identify, as two IC cards, the PTD 10 or 10A and the SE 20 or 20A of the hybrid portable communication terminal 70. As has already been briefly explained while referring to Figs. 13 and 14, the local server 30 can also be permitted to identify, as one IC card, the predetermined server 40 that communicates with the PTD 10. Fig. 17 is a schematic diagram showing a third embodiment of the present invention for such identification. In this embodiment, a server 40 with which a communication unit 12 of a PTD 10 is communicating, using the Internet 42 functions, as the above described network wallet, is identified as the third IC card by the local server 30. The carriage 44 in Figs. 6 and 16 is not shown in Fig. 17 or in Figs. 18 to 24 for the other embodiments.

### <Fourth Embodiment>

Fig. 18 is a schematic diagram showing a fourth embodiment of the present invention. The fourth embodiment is a modification of the second embodiment shown in Figs. 15 and 16, and as in the third embodiment, a predetermined server 40 that is communicating with a PTD 10A can also be identified as an IC card by a local server 30.

### <Fifth Embodiment>

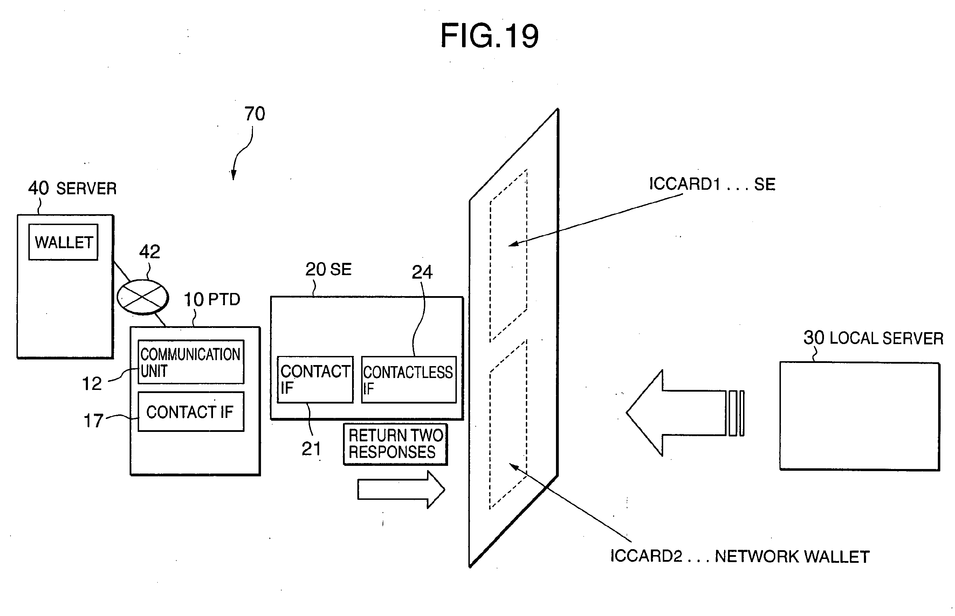

Fig. 19 is a schematic diagram showing a fifth embodiment of the present invention. The fifth embodiment is a modification of the third embodiment in Fig. 17. As well as in the third embodiment, the local server 30 is permitted to identify, as an IC card, a predetermined server 40 that is communicating with a PTD 10. However, unlike the third embodiment, the PTD 10 is not identified by the local server 30. Therefore, the local server 30 identifies as two IC cards two communication parties, i.e., an SE 20 and the server 40.

### <Sixth Embodiment>

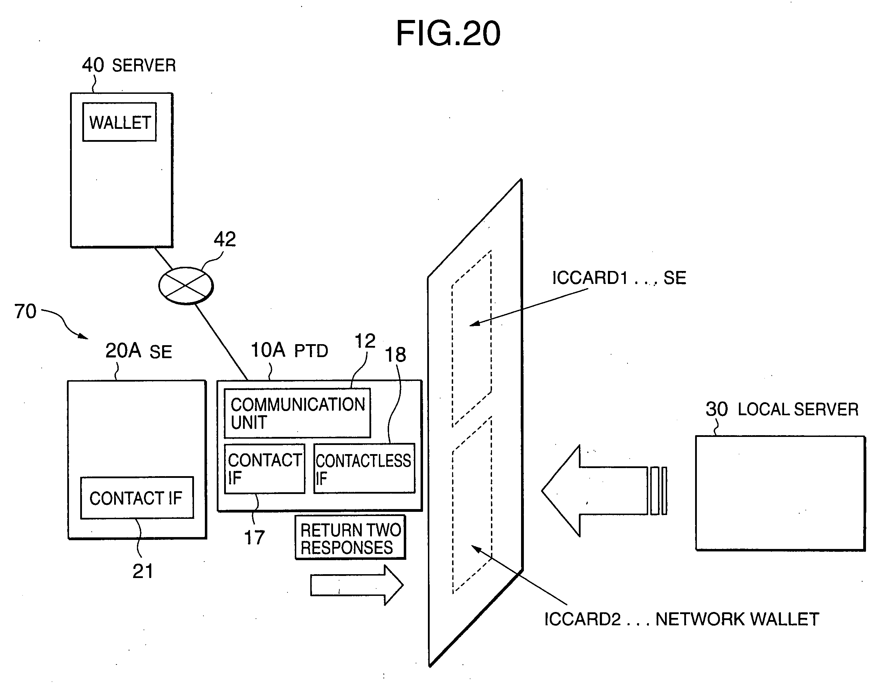

Fig. 20 is a schematic diagram showing a sixth embodiment of the present invention. The sixth embodiment is a modification of the fourth embodiment in Fig. 18, and as in the fourth embodiment, a predetermined server 40 that is communicating with a PTD 10A can also be identified as an IC card by a local server 30. However, unlike the fourth embodiment, the PTD 10A is not identified by the local server 30. Therefore, the local server 30 identifies, as two IC cards, two communication parties, i.e., an SE 20A and the server 40.

### <Example Usage 1 of the Invention>

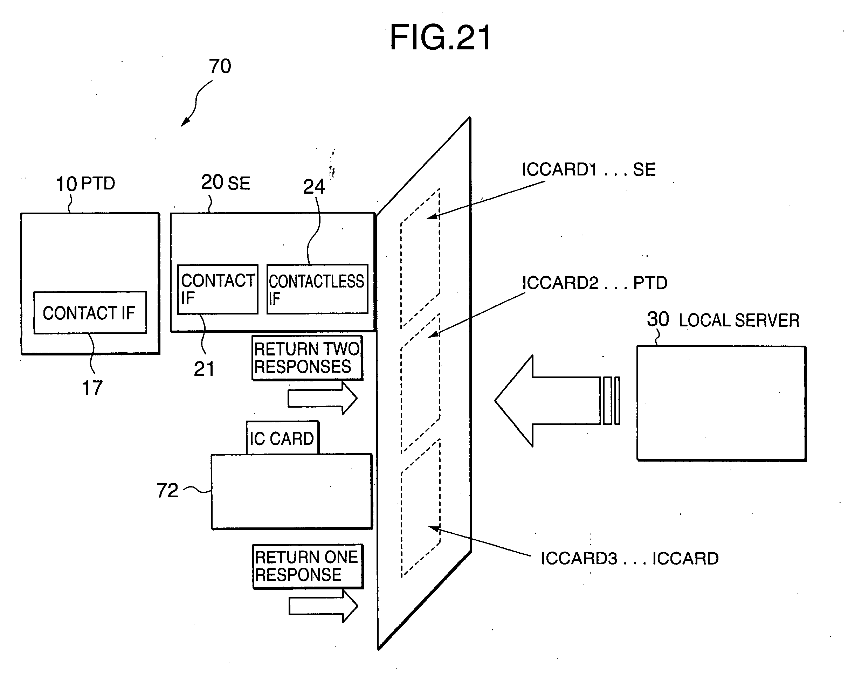

Fig. 21 is a schematic diagram showing an example usage of the hybrid portable communication terminal 70 of the present invention. The first embodiment shown in Fig. 7 is employed for the explanation; however, other embodiments can also be employed in the same manner. When the local server 30 identifies as individual IC cards the PTD 10 and the SE 20 of the hybrid portable communication terminal 70, and when another IC card 72 approaches the local server 30, the local server 30 transmits a command to the IC card 72, which returns one PUPI. Therefore, the local server 30 can communicate with three IC cards.

### <Example Usage 2 of the Invention>

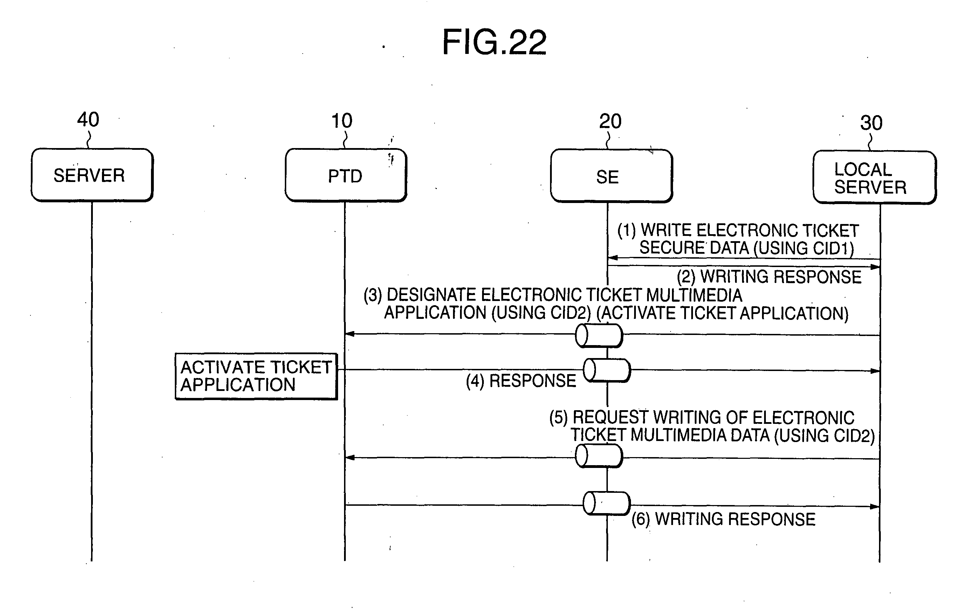

Fig. 22 is a diagram for explaining an example wherein the hybrid portable communication terminal 70 of the invention serves as an electronic ticket. In this example, at first, a local server 30 accesses an SE 20 and writes secure data, and thereafter, display data and accompanied multimedia data are stored in a PTD 10 through the communication with the PTD 10 and the contents of a ticket are displayed on the display screen of the PTD 10. Therefore, the usage environment for multimedia data, which is the characteristic of the electronic ticket, can be provided, and a user can visually identify the electronic ticket that is purchased.

When the application program for the PTD 10 is employed, the application program is operated as though the local server 30 directly accesses the application program of the PTD 10 without employing the application program for the SE 20. An explanation will now be given for an example wherein an electronic ticket is purchased from a local server by using the hybrid portable communication terminal 70.

A user approaches the PTD 10, which includes the SE 20 near the interface 31 of the local server 30. Using this approach, (1) the local server 30 transmits an electronic ticket secure data writing request to the SE 20. At this time, the CID1 explained while referring to Fig. 8 is employed. The electronic ticket secure data writing request is received through the interface 24, and by employing a predetermined analysis, the CPU 22 reads a predetermined application program from the memory 23 and activates the program. The electronic ticket secure data are then written to the memory 23. And (2) this application program notifies the local server 30 that the electronic ticket secure data have been written to the memory 23. Thereafter, the data can be exchanged, through the SE 20, by the local server 30 and the PTD 10.

That is, the CPU 22 controls the interfaces 21 and 24 as though the SE 20 were serving as a tunnel for a data path. Then, (3) while the data are passing through the SE 20, the local server 30 designates, for the PTD 10, the electronic multimedia application program and activates this program. At this time, the CID2 explained while referring to Fig. 8 is employed. The PTD 10 reads the electronic ticket multimedia application program from the memory 14, and activates the program. Following which, (4) the response for this effect is transmitted through the SE 20 to the local server 30. Thereafter, (5) when the local server 30 transmits an electronic ticket multimedia data as a written request through the SE 20 to the PTD 10, the CID2 will also be employed. And (6) the PTD 10 will transmit a writing response to the local server 30 through the SE 20.

In the above example, the PTD 10 activates the application program, and performs the data processing for the electronic ticket. However, the server 40 may be accessed through the Internet 42 and further data processing may be requested.

### <Example Usage 3 of the Invention>

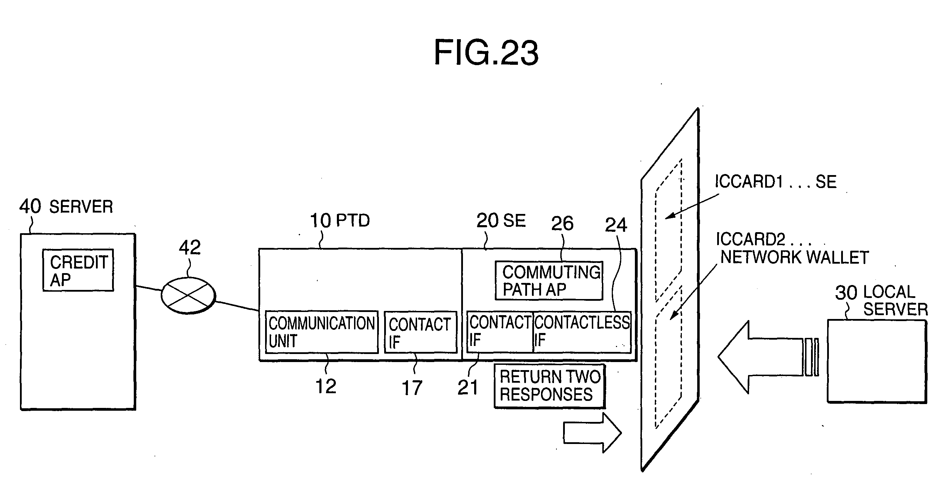

Fig. 23 is a diagram for explaining an example wherein a commuting path (a commutation ticket) is a contactless card terminal that is purchased by using the hybrid portable communication terminal 70 of the invention. This example usage employs the fifth embodiment in Fig. 18; however, the sixth embodiment in Fig. 20, the third embodiment in Fig. 17 or the fourth embodiment in Fig. 18 can also be employed in the same manner. The SE 20 includes a commuting path application program 26, and when a commuting path is purchased through communication with the local server 30, this information is written to the commuting path application program 26. The payment, i.e., the accounting, is performed through communication with the server 40.

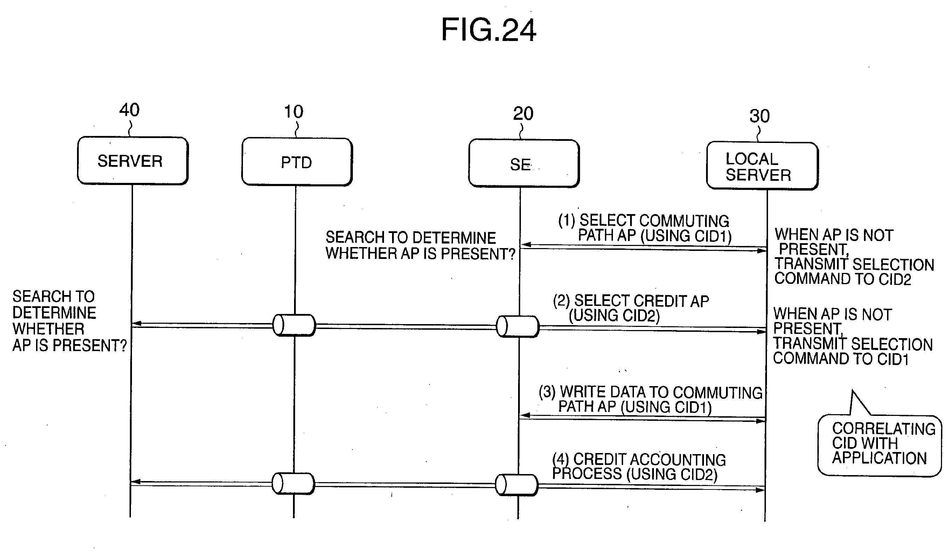

Fig. 24 is a sequence chart for explaining the operation of the example usage in Fig. 23. A user approaches the PTD 10, including the SE 20, near the interface 31 of the local server 30. Using this approach, (1) the local server 30 transmits a commuting path application program selection request to the SE 20. At this time, the CID1 explained while referring to Fig. 8 is employed. The commuting path application program selection request is received through the interface 24, and the CPU 22 examines the memory 23, using a predetermined analysis, to determine whether a predetermined commuting path application program is present. When as the result of the search it is determined that this program is not present, a notification to this effect is transmitted to the local server 30 by the SE 20.

Then, (2) upon receiving this notification, the local server 30 transmits a credit application program selection request to the SE 20. At this time, the CID2, explained while referring to Fig. 8, is employed. This request is then transmitted to the server 40 through the SE 20 and the PTD 10, and the server 40 determines whether the credit application program is present in the server 40. The server 40 then transmits the search results to the local server 30 through the PTD 10 and the SE 20. Thereafter, (3) when the predetermined credit application program is present, the local server 30 writes this information to the commuting path application program of the SE 20, and at this time, the CID1 is employed. When this writing is completed, the SE 20 notifies the local server 30 of this effect. And then, (4) the local server 30 transmits a credit accounting process request to the server 40 through the SE 20 and the PTD 10. At this time, the CID2 is employed, and when the accounting is completed, the server 40 transmits a notification to this effect to the local server 30 through the PTD 10 and the SE 20.

According to the example usages in Figs. 23 and 24, the local server 30 need only perform the same process as are performed for the two IC cards to permit the predetermined server 40 to perform the complicated credit accounting within a short period of time. Further, since the network wallet, as the electronic purse, is provided not in the hybrid portable communication terminal that is generally carried, but along the network (in the server 40), there is no need to worry that the network wallet will be lost or stolen.

There are various other usages for the hybrid portable communication terminal of the present invention. For example, the hybrid portable communication terminal can handle a process request issued by an accounting terminal, such as a transportation facility, a fee-charging facility, a ticket shop, a ticket vending machine or a POS terminal, in order to perform the electronic accounting required for electronic money, a prepaid card or an electronic security.

As is apparent from the above description, according to the present invention, a hybrid portable communication terminal, which is a data processing apparatus comprising terminals belonging to different communication systems, employs together or selectively, as needed, an application program included in a portable telephone and an application program for performing various data processes through close-range, contactless communication with an external communication terminal. Further, without changing the function defined by the standards established for a local server, such as an external card reader/writer, it is possible for the local server to identify a terminal that is a communication party. Therefore, in a environment wherein high security is maintained, fast data exchange and fast data processing can be performed. In addition, it is possible to eliminate any reduction in the efficiency and the complexity of the operation when a conventional portable terminal and a contactless IC card are employed independently or are merely employed together. And also, a predetermined communication process can be performed between the local server and a predetermined communication terminal.

## Claims

1. A data processing apparatus comprising:
a first device; and
a second device detachably or fixedly connected to said first device,
wherein said first device includes
a response registration controller,
second communication means for communicating with said second device,
first storage means for storing a first application, and
first control means for executing said first application, and for controlling said response registration controller, said second communication means and said first storage means,
wherein said second device includes
a response count controller,
third communication means for communicating with said first device,
fourth communication means for communicating with an external communication terminal,
second storage means for storing a second application, and
second control means for executing said second application and for controlling said response count controller, said third communication means, said fourth communication means and said second storage means,
wherein, for communication with said external communication terminal effected through said second communication means, said third communication means and said fourth communication means, said response registration controller exerts influence on said second control means to convince said external communication terminal that said first device is a party to a direct communication for said external communication terminal, and
wherein, for communication with said external communication terminal effected through said fourth communication means, when a request for the detection of a communication party is received from said external communication terminal, said response count controller transmits to said external communication data a response consisting of data indicating said second device, and when said influence is exerted by said first control means, transmits to said external communication terminal a response consisting of data indicating said first device.

2. A data processing apparatus comprising:
a first device; and
a second device detachably or fixedly connected to said first device,
wherein said first device includes
a response registration controller,
second communication means for communicating with said second device,
third communication means for communicating with an external communication terminal,
first storage means for storing a first application, and
first control means for executing said first application, and for controlling said response registration controller, said second communication means, said third communication means and said first storage means,
wherein said second device includes
a response count controller,
fourth communication means for communicating with said first device,
second storage means for storing a second application, and
second control means for executing said second application and for controlling said response count controller, said fourth communication means and said second storage means,
wherein, for communication with said external communication terminal effected through said fourth communication means, said second communication means and said third communication means, said response registration controller exerts influence on said first control means to convince said external communication terminal that said second device is a party to a direct communication for said external communication terminal, and
wherein, for communication with said external communication terminal effected through said third communication means, when a request for the detection of a communication party is received from said external communication terminal, said response count controller transmits to said external communication terminal a response consisting of data indicating said second device, and when said influence is exerted by said second control means, transmits to said external communication terminal a response consisting of data indicating said first device.

3. A data processing apparatus comprising:
a first device; and
a second device detachably or fixedly connected to said first device,
wherein said first device includes
a response registration controller,
first communication means for communicating with an external device,
second communication means for communicating with said second device,
first storage means for storing a first application, and
first control means for executing said first application, and for controlling said response registration controller, said first communication means, said second communication means and said first storage means,
wherein said second device includes
a response count controller,
third communication means for communicating with said first device,
fourth communication means for communicating with an external communication terminal,
second storage means for storing a second application, and
second control means for executing said second application and for controlling said response count controller, said third communication means, said fourth communication means and said second storage means,
wherein, for communication with said external communication terminal effected through said second communication means, said third communication means and said fourth communication means, when said first communication means is communicating with said external device, said response registration controller exerts influence on said second control means to convince said external communication terminal that said first device and said external device are parties to a direct communication for said external communication terminal, and
wherein, for communication with said external communication terminal effected through said fourth communication means, when a request for the detection of a communication party is received from said external communication terminal, said response count controller transmits to said external communication terminal a response consisting of data indicating said second device, and when said influence is exerted by said first control means, transmits to said external communication terminal a response consisting of data indicating said first device and said external device.

4. A data processing apparatus comprising:
a first device; and
a second device detachably or fixedly connected to said first device,
wherein said first device includes
a response registration controller,
first communication means for communicating with an external device,
second communication means for communicating with said second device,
third communication means for communicating with an external communication terminal,
first storage means for storing a first application, and
first control means for executing said first application, and for controlling said response registration controller, said first communication means, said second communication means, said third communication means and said first storage means,
wherein said second device includes
a response count controller,
fourth communication means for communicating with said first device,
second storage means for storing a second application, and
second control means for executing said second application and for controlling said response count controller, said fourth communication means and said second storage means,
wherein, for communication with said external communication terminal effected through said fourth communication means, said second communication means and said third communication means, said response registration controller exerts influence on said first control means to convince said external communication terminal that said second device is a party to a direct communication for said external communication terminal, and
wherein, for communication with said external communication terminal effected through said third communication means, when a request for the detection of a communication party is received from said external communication terminal, and when said first communication means is communicating with said external device, said response count controller transmits to said external communication terminal a response consisting of data indicating said first device and said external device, and when said influence is exerted by said second control means, transmits to said external communication terminal a response consisting of data indicating said second device.

5. A data processing apparatus comprising:
a first device; and
a second device detachably or fixedly connected to said first device,
wherein said first device includes
a response registration controller,
first communication means for communicating with an external device,
second communication means for communicating with said second device,
first storage means for storing a first application, and
first control means for executing said first application, and for controlling said response registration controller, said first communication means, said second communication means and said first storage means,
wherein said second device includes
a response count controller,
third communication means for communicating with said first device,
fourth communication means for communicating with an external communication terminal,
second storage means for storing a second application, and
second control means for executing said second application and for controlling said response count controller, said third communication means, said fourth communication means and said second storage means,
wherein, for communication with said external communication terminal effected through said second communication means, said third communication means and said fourth communication means, when said first communication means is communicating with said external device, said response registration controller exerts influence on said second control means to convince said external communication terminal that said external device is a party to a direct communication for said external communication terminal, and
wherein, for communication with said external communication terminal effected through said fourth communication means, when a request for the detection of a communication party is received from said external communication terminal, said response count controller transmits to said external communication terminal a response consisting of data indicating said second device, and when said influence is exerted by said first control means, transmits to said external communication terminal a response consisting of data indicating said external device.

6. A data processing apparatus comprising:
a first device; and
a second device detachably or fixedly connected to said first device,
wherein said first device includes
a response registration controller,
first communication means for communicating with an external device,
second communication means for communicating with said second device,
third communication means for communicating with an external communication terminal,
first storage means for storing a first application, and
first control means for executing said first application, and for controlling said response registration controller, said first communication means, said second communication means, said third communication means and said first storage means,
wherein said second device includes
a response count controller,
fourth communication means for communicating with said first device,
second storage means for storing a second application, and
second control means for executing said second application and for controlling said response count controller, said fourth communication means and said second storage means,
wherein, for communication with said external communication terminal effected through said fourth communication means, said second communication means and said third communication means, said response registration controller exerts influence on said first control means to convince said external communication terminal that said external device is a party to a direct communication for said external communication terminal, and
wherein, for communication with said external communication terminal effected through said third communication means, when a request for the detection of a communication party is received from said external communication terminal, and when said first communication means is communicating with said external device, said response count controller transmits to said external communication terminal a response consisting of data indicating said external device, and when said influence is exerted by said second control means, transmits to said external communication terminal a response consisting of data indicating said second device.

7. The data processing apparatus according to any one of claims 1 to 6, wherein, when said first device is powered on, said response registration controller transmits a registration request to said response count controller.

8. The data processing apparatus according to any one of claims 3 to 6, wherein, when said first device communicates with said external device through said first communication means, said response registration controller transmits to said response count controller a registration request for said external device.

9. The data processing apparatus according to claim 8, wherein, when communication with said external device is disabled, said response registration controller transmits, to said response count controller, a registration request that includes data other than data indicating said external device.

10. The data processing apparatus according to any one of claims 1 to 9 wherein said response count controller includes:
device management means for identifying and managing a device from which said registration request has been received;
device identification generation means for, upon receiving said registration request, generating arbitrary identification information;
comparison means for determining whether the same identification information as said identification information generated by said device identification information generation means is present in said device management means; and
registration means for, upon receiving said registration request, registering as new a identification registration said identification information that is not present in said device management means.

11. The data processing apparatus according to any one of claims 1 to 9 wherein said response count controller includes:
device management means for identifying and managing a device from which said registration request is received;
comparison means for, upon the reception of said registration request, determining whether the same information as either information provided by said device that has issued said registration request, or information obtained using said information is present in said device management means; and
registration means for when, upon the reception of said registration request, the same information is not present in said device management means, registering as new information said information or information obtained from said information, and for, when the same information is present in said device management means, registering, as new information, information that is not present in said device management means.

12. The first device according to any one of claims 1 to 11.

13. The second device according to any one of claims 1 to 11.
